# EUROPÄISCHE PATENTANMELDUNG

(11) **EP 2 309 166 A1**
(43) Veröffentlichungstag der Anmeldung: **13.04.2011**
(21) Anmeldenummer: 10007037.4
(22) Anmeldetag: 08.07.2010
(51) Int. Cl.: F17C 11/00

(54) **Behälter und Verfahren zum Speichern von Gas mit einem in einem Metallschäum zusammengefügte Adsorbent**

(30) Priorität: 11.09.2009 DE 102009040947
(71) Anmelder: E.ON Ruhrgas AG, 45138 Essen (DE)
(72) Erfinder: Adelt, Marius, Dr.-Ing., 46286 Dorsten (DE)
(74) Vertreter: Harlacher, Mechthild

(57) **Zusammenfassung**

Die Erfindung betrifft einen Behälter (1) und ein Verfahren zum Speichern von Gas, insbesondere von gasförmigen 8rennstoffen, mit einem Adsorbens als Speichermaterial für das Gas.

Erfindungsgemäß befindet sich in dem Behälter (1) ein wärmeleitender Körper (3), der eine Vielzahl von Öffnungen (4) aufweist, wobei das Adsorbens in den Öffnungen gelagert wird. Vorzugsweise besteht der wärmeleitende Körper (3) aus einem geschäumten Metall, wobei die Öffnungen (4) als offene Poren ausgebildet sind. Als Adsorbens wird vorzugsweise ein pulverförmiges Adsorbens eingesetzt, welches in die Öffnungen eingerieselt oder eingeschwämmt wird.

## Beschreibung

Die Erfindung betrifft einen Behälter und ein Verfahren zum Speichern von Gas, insbesondere von gasförmigen Brennstoffen, mit einem Adsorbens als Speichermaterial für das Gas.

Unter Speichern wird Lagern oder Bevorraten für mobile oder stationäre Anwendungen verstanden. Gasförmigen Brennstoffen, insbesondere Erdgas oder Wasserstoff werden auch als Treibstoff für Fahrzeuge eingesetzt. Bekannt ist das Speichern von gasförmigen Motorentreibstoffen in Druckbehältern, beispielsweise in Stahlflaschen. Erdgas wird in den Druckbehältern üblicherweise bei einem Druck von ca. 200 bar gespeichert. Wasserstoff wird bei Drücken von 350 bar bis ca. 800 bar gespeichert.

Nachteil der bekannten Druckbchälter bzw. Tanks ist eine niedrige volumenbezogene Speicherkapazität und ein hohes Gewicht, wodurch die Reichweite von erdgasbetriebenen Fahrzeugen auf ca. 400 km und die Reichweite von wasserstoffbetriebenen Fahrzeugen auf ca. 250 km begrenzt ist.

Aus der DE 10 2006 021 012 ist ein Fahrzeug mit einem Gastank mit einem Adsorbens als Speichermaterial bekannt. Als Adsorbens werden sogenannte MOF (engl. metal-organic framework) verwendet. Bei MOFs handelt es sich um pulverförmige poröse Nanomaterialien mit sehr großer spezifischer Oberfläche und genau definierten Kristallstrukturen. Aufgrund ihrer anorganisch-organischen Hybridstruktur lässt sich die Porengröße exakt einstellen. Daher sind diese Materialien zur Speicherung unterschiedlicher Gase besonders gut geeignet.

Ferner ist aus der WO 2005/10250 ein Gaspeichersystem bekannt, bei dem als Speichermaterial unterschiedliche Adsorbentien, beispielsweise Zeolithe, also anorganische Kristalle, verwendet werden. Das Speichermaterial wird zu Briketts verpresst.

Adsorption ist ein thermischer Prozess. Beim Einspeichern von Gas bzw. beim Betanken wird Wärme (Adsorptionsenthalpie) freigesetzt, was zu einer unerwünschten Erwärmung des Behälters bzw. des Tanks führt und die Gasaufnahmekapazität senkt. Bei der Gasentnahme wird dagegen Wärme aufgenommen, was zu einer unerwünschten Abkühlung mit Begrenzung der Gasfreigabe bis zum Erliegen, beispielsweise während des Fahrbetriebs, führen kann. Folglich ist ein effizientes Wärmemanagement Vorraussetzung für den technischen Einsatz von adsorptiver Gasspeicherung, insbesondere in Tanks für gasbetriebene Fahrzeuge.

Ein Wärmemanagement ist bei der Verwendung von MOFs, Zeolithen und anderen Adsorbentien als Speichermaterial für Gas schwierig, weil sie in der Regel nur eine sehr geringe Wärmeleitfähigkeit aufweisen, was die Abführung oder Zuführung von Wärme aus bzw. in das Adsorberbett behindert. Zudem sind MOFs nur begrenzt temperaturbeständig.

Aufgabe der Erfindung ist es, für einen Behälter zum Speichern von Gas, insbesondere von gasförmigen Brennstoffen, mit einem beliebigen Adsorbens als Speichermaterial für das Gas, ein effektives Wärmemanagement zu schaffen.

Diese Aufgabe wird durch einen Behälter mit den Merkmalen des Anspruchs 1 gelöst.

In einem Behälter ist ein wärmeleitender Körper angeordnet, der eine Vielzahl von Öffnungen aufweist, in denen das Adsorbens gelagert wird. Der Körper ist hoch wärmeleitend. Der Erfindung liegt die Erkenntnis zu Grunde, dass ein poröser Körper, der als Adsorberbett fungiert, die geringe Wärmeleitfähigkeit des Adsorbens kompensiert werden kann. Der Körper ermöglicht auf einfache Weise ein effektives Wärmemanagement.

Der Behälter kann eine beliebige Form aufweisen. Er kann beispielsweise quaderförmig oder zylinderförmig sein. Der poröse Körper kann auf einfache Weise an die Form des Behälters angepasst werden.

Nach einem wesentlichen Merkmal der Erfindung besteht der wärmeleitende Körper aus geschäumtem Metall, wobei die Öffnungen als offene Poren ausgebildet sind. Als Metall eignet sich insbesondere Aluminium oder Kupfer. Alternativ kann auch ein wärmeleitender Kunststoff oder Keramik als Material für den wärmeleitenden Körper verwendet werden.

Erfindungsgemäß ist das Adsorbens pulverförmig. Es können beliebige Adsobentien eingesetzt werden, die sich für die Speicherung des jeweiligen Gases eignen. Vorzugsweise wird als Adsorbens ein MOF (metal-organic framework) verwendet, welche eine hohe Adsorptionskapazität aufweisen. Versuche haben gezeigt, dass die theoretische, volumenbezogene Methanspeicherkapazität unter Verwendung von Cu-MOF im Vergleich zu bekannten Druckspeichern wesentlich erhöht werden kann.

Nach der Erfindung kann das Adsorbens in den Öffnungen des Körpers fixiert werden. Das pulverförmige Adsorptionsmittel wird in den Öffnungen des Körpers mittels eines Zusatzmittels fixiert. Durch Wahl eines gceigneten Mittels wird gewährleistet, dass die Gasdiffusion nicht beeinträchtigt wird.

Nach einem weiteren Merkmal der Erfindung steht der Körper wärmeleitend mit dem Behälter in Kontakt. Vorzugsweise ist der Körper mittels eines wärmeleitenden Klebstoffes mit dem Behälter fest verbunden, um eine gute Wärmeleitung zu gewährleisten. Zwecks Wärmemanagement während des Beladens des Behälters, bei dem es zu einer Erwärmung des Behälters kommt und während der Entladung, bei der es zu einer Abkühlung kommt, stehen der Körper und/oder eine Wand des Behälters in wärmeleitendem Kontakt mit einer Temperiereinrichtung, d. h. einer Einrichtung, die je nach Bedarf Wärme zuführt oder Wärme abführt. Der Behälter kann bei der Befüllung mit Gas gekühlt und bei der Entnahme von Gas beheizt werden. Es können auch getrennte Einrichtungen zum Beheizen und zum Kühlen vorgesehen werden. Der wärmeleitende Kontakt zwischen Körper und Temperiereinrichtung kann auch mittels einer Wärmetauscheinrichtung hergestellt werden. Vorzugsweise wird die Außenwand des Behälters auf einfache Weise mittels einer Flüssigkeit temperiert, d. h. bedarfweise beheizt oder gekühlt.

Vorzugsweise befindet sich in dem Köper mindestens eine Bohrung, die von dem Gas durchströmt wird. Mittels der Bohrung wird die Fläche vergrößert, durch die Gas in die Öffnungen mit dem Adsorbens eintreten kann.

Erfindungsgemäß ist der Körper an denjenigen Außenflächen, an denen Gas ein- und austreten kann, von einem Metall- oder Kunstfasergewebe umgeben bzw. abgedeckt. Damit wird gewährleistet, dass das pulverförmige Adsorbens nicht durch Gasströme bei der Gaszuführung oder der Entnahme mitgerissen wird. Als Außenfläche ist auch die Wand der Bohrung zu verstehen.

Nach der Erfindung ist der Behälter als Hochdruckbehälter für die Speicherung von Gas unter hohem Druck ausgebildet, so dass die Vorteile der Speicherung von Gas unter hohem Druck und Verwendung von Speichermaterialien in Kombination genutzt werden können. Wird ein derartiger Behälter als Treibstofftank für ein gasbetriebenes Fahrzeug verwendet, erhöht sich die Reichweite des Fahrzeuges gegenüber dem Stand der Technik wesentlich. Zudem ist der Behälter kompatibel mit der Infrastruktur an Erdgas-Tankstellen.

Nach einem weiteren vorteilhaften Merkmal der Erfindung weist der Behälter auf konstruktiv einfache Weise einen einzigen Anschluss zum Be- und Entladen auf. Alternativ könnte aber auch jeweils ein separater Anschluss zum Befüllen und zur Entnahme des Gases vorgesehen werden.

Die Erfindung schafft ferner ein Verfahren zum Speichern von Gas mit einem erfindungsgemäßen Behälters, wobei pulverförmiges Adsorbens in die Öffnungen des Körpers eingerieselt oder in Form einer Suspension in die Öffnungen eingeschwämmt wird.

Vorzugsweise wird das Adsorbens mit einem Zusatzmittel vermischt, welches die Fixierung des Adsorbens in den Öffnungen des Körpers bewirkt.

Bei 50 bar bis 70 bar entfalten die meisten Adorbentien ihre volle Wirkung. Bei dem erfindungsgemäßen Verfahren ist der Druck des Gases im Behälter höher als 100 bar. Dies hat den Vorteil, dass der Behälter mit der vorhandenen Infrastruktur von Erdgas-Tankstellen kompatibel ist. Der Nenndruck von Erdgas an Tankstellen beträgt 200 bar und der maximale Druck ca. 260 bar.

Die Erfindung wird im Folgenden anhand eines bevorzugten Ausführungsbeispiels des erfindungsgemäßen Behälters in Zusammenhang mit der Zeichnung näher erläutert. Die Zeichnung zeigt in:

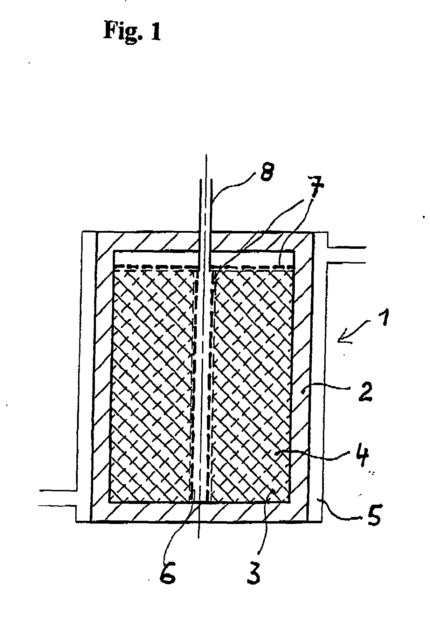

Fig. 1 einen Längsschnitt durch einen schematisch dargestellten Behälter zum Speichern von Erdgas.

Der in Fig. 1 dargestellte Behälter 1 ist als Tank für die Speicherung von Erdgas unter hohem Druck für ein erdgasbetriebenes Fahrzeug ausgebildet. Der Druck des Gases im Behälter beträgt ca. 200 bar. Die Wand 2 des Behälters ist entsprechend druckfest ausgebildet. In dem Behälter 1 ist ein wärmeleitender Körper 3 angeordnet, der eine Vielzahl von Öffnungen 4 aufweist, in denen ein nicht dargestelltes Adsorbens gelagert wird. Der Körper 3 besteht aus einem geschäumten Metall, hier Aluminium, wobei die Öffnungen 4 als Poren ausgebildet sind.

Vorzugsweise wird als Adsorbens ein feinkörniges pulverförmiges MOF (metal-organic framework) mit hoher Adsorptionskapazität eingesetzt. Das pulverförmige Adsorbens wird in die Öffnungen des Körpers eingerieselt oder in Form einer Suspension in die Öffnungen eingeschwämmt. Das Adsorbens wird mit einem Zusatzmittel vermischt, welches eine Fixierung des Adsorbens in den Öffnungen 4 des Körpers 1 bewirkt. Durch Wahl eines geeigneten Mittels wird gewährleistet, dass die Gasdiffusion nicht beeinträchtigt wird. Das Adsorbens füllt die Öffnungen 4 bzw. Poren im Körper 2 mit mehr als 90 % des Gesamtvolumens.

Der Körper 3 steht mit dem Behälter 1 bzw. mit der Wand 2 des Behälters in wärmeleitendem Kontakt. Dazu ist der Körper 3 mit einem nicht dargestellten wärmeleitenden Klebstoff mit der Wand 2 des Behälters 1 fest verklebt, um eine gute Wärmeleitung zu gewährleisten.

Während des Betankens erfolgt eine Erwärmung, während bei der der Entnahme von Gas während des Fahrbetriebs eine Abkühlung erfolgt..Die Wand 2 des Behälters 1 steht daher in wärmeleitendem Kontakt mit einer Temperiereinrichtung 5, d. h. einer Einrichtung, die je nach Bedarf Wärme zuführt oder Wärme abführt. Der Behälter 1 wird beim Befüllen mit Gas gekühlt und bei der Entnahme von Gas beheizt. Die Wand 2 des Behälters 1 wird außenseitig auf einfache Weise mittels einer Flüssigkeit temperiert, d. h. bedarfweise beheizt oder gekühlt.

Vorzugsweise befindet sich in dem Köper 3 mindestens eine Bohrung 6, die von Erdgas durchströmt wird. Mittels der Bohrung 6 wird die Fläche vergrößert, durch die Erdgas in die Öffnungen 4 mit dem Adsorbens eintreten kann.

Erfindungsgemäß ist der Körper 3 an denjenigen Außenfläche, an der Gas ein- und austreten kann, von einem Metall- oder Kunstfasergewebe 7 umgeben bzw. abgedeckt. Damit wird gewährleistet, dass das pulverförmige Adsorbens nicht durch Gasströme bei der Gaszuführung oder der Entnahme mitgerissen wird. Als Außenfläche ist auch die Wand der Bohrung 6 zu verstehen.

Der Behälter 1 weist ferner auf konstruktiv einfache Weise einen einzigen Anschluss 8 zum Beladen bzw. zum Betanken und zur Entnahme des Gases auf.

Im Rahmen der Erfindung sind ohne weiteres Abwandlungen möglich. Es könnten getrennte Einrichtungen zum Beheizen und zum Kühlen vorgesehen werden. Der wärmeleitende Kontakt zwischen Körper 3 und Temperiereinrichtung 5 kann auch mittels einer Wärmetauscheinrichtung hergestellt werden. Erfindungsgemäß kann anstelle eines Metallfasergewebes ein Kunstfasergewebe zum Abdecken der Außenflächen des Körpers 3 verwendet werden.

## Patentansprüche

1. Behälter zum Speichern von Gas, insbesondere von gasförmigen Brennstoffen, mit einem Adsorbens als Speichermaterial für das Gas,
**dadurch gekennzeichnet,**
**dass** sich in dem Behälter (1) ein wärmeleitender Körper (3) befindet, der eine Vielzahl von Öffnungen (4) aufweist und dass das Adsorbens in den Öffnungen (4) gelagert wird.

2. Behälter nach Anspruch 1, **dadurch gekennzeichnet, dass** der Körper (3) aus einem geschäumten Metall besteht, wobei die Öffnungen (4) als offene Poren ausgebildet sind.

3. Behälter nach Anspruch 1 oder 2, **dadurch gekennzeichnet, dass** der Körper (3) aus Aluminium oder Kupfer besteht.

4. Behälter nach einem der Ansprüche 1 bis 3,
**dadurch gekennzeichnet, dass** das Adsorbens pulverförmig ist.

5. Behälter nach einem der Ansprüche 1 bis 4, **dadurch gekennzeichnet, dass** das Adsorbens in den Öffnungen (4) des Körpers (3) fixiert ist.

6. Behälter nach einem der Ansprüche 1 bis 5, **dadurch gekennzeichnet, dass** der Körper (3) und der Behälter (1) in wärmeleitendem Kontakt stehen, insbesondere mittels eines wärmeleitenden Klebstoffes.

7. Behälter nach einem der Ansprüche 1 bis 6,
**dadurch gekennzeichnet, dass** der Körper (3) und/oder eine Wand (2) des Behälters (1) in wärmeleitendem Kontakt mit einer Temperiereinrichtung (5) stehen.

8. Behälter nach einem der Ansprüche 1 bis 7,
**dadurch gekennzeichnet, dass** die Wand (2) des Behälter (1) außenseitig mittels einer Flüssigkeit temperiert wird.

9. Behälter nach einem der Ansprüche 1 bis 8, **dadurch gekennzeichnet, dass** sich in dem Körper (3) mindestens eine Bohrung (8) befindet, die von dem Gas durchströmt wird.

10. Behälter nach einem der Ansprüche 1 bis 9, **dadurch gekennzeichnet, dass** der Körper (3) an denjenigen Außenfläche, an denen Gas ein- und austreten kann, von einem Metall- oder Kunstfasergewebe (7) umgeben ist.

11. Behälter nach einem der Ansprüche 1 bis 10, **dadurch gekennzeichnet, dass** der Behälter (1) als Hochdruckbehälter für die Speicherung von Gas unter hohem Druck ausgebildet ist.

12. Behälter nach einem der Ansprüche 1 bis 11, **dadurch gekennzeichnet, dass** der Behälter (1) einen Anschluss (8) zum Be-und Entladen aufweist.

13. Verfahren zum Speichern von Gas mit einem Behälter nach einem der Ansprüche 1 bis 12, **dadurch gekennzeichnet, dass** das Adsorbens als Pulver in die Öffnungen (4) des Körpers (3) oder in Form einer Suspension in die Öffnungen (4) eingeschwämmt wird.

14. Verfahren nach Anspruch 13, **dadurch gekennzeichnet, dass** das Adsorbens mit einem Zusatzmittel vermischt wird, welches eine Fixierung des Adsorbens in den Öffnungen (4) des Körpers (3) bewirkt.

15. Verfahren nach Anspruch 13 oder 14, **dadurch gekennzeichnet, dass** der Druck des Gases im Behälter höher als 100 bar ist.
